Europäisches Patentamt

European Patent Office

Office européen des brevets

(19)

(11) Veröffentlichungsnummer : **0 114 653**
**B1**

(12) **EUROPÄISCHE PATENTSCHRIFT**

(45) Veröffentlichungstag der Patentschrift :
03.12.86

(21) Anmeldenummer : 84100482.3

(22) Anmeldetag : 18.01.84

(51) Int. Cl.⁴ : **F 01 L** 3/08, C 04 B 35/48

(54) **Ventilführung für einen Verbrennungsmotor.**

(30) Priorität : 21.01.83 DE 3301912

(43) Veröffentlichungstag der Anmeldung :
01.08.84 Patentblatt 84/31

(45) Bekanntmachung des Hinweises auf die Patenterteilung : 03.12.86 Patentblatt 86/49

(84) Benannte Vertragsstaaten :
BE DE FR GB IT NL SE

(56) Entgegenhaltungen :
EP-A- 0 036 786
EP-A- 0 067 327
DE-A- 2 451 169
DE-A- 3 200 549
US-A- 2 775 024

(73) Patentinhaber : Feldmühle Aktiengesellschaft
Fritz-Vomfelde-Platz 4
D-4000 Düsseldorf 11 (DE)

(72) Erfinder : Fingerle, Dieter, Dr. Dipl.-Ing.
Kirchheimer Strasse 34
D-7311 Hochdorf (DE)
Erfinder : Dworak, Ulf, Dr. Dipl.-Mineraloge
Pfarrstrasse 50
D-7066 Baltmannsweiler 2 (DE)
Erfinder : Krohn, Ulrich, Dr. Dipl.-Ing.
Elsterweg 8
D-7520 Leonberg 1 (DE)
Erfinder : Olapinski, Hans, Dr. Dipl.-Chem.
Talstrasse 12
D-7307 Aichwald 1 (DE)

EP 0 114 653 B1

Beschreibung

Die vorliegende Erfindung betrifft eine röhrenförmige Ventilführung aus keramischem Werkstoff mit einer Bohrung für einen metallischen Ventilschaft eines Verbrennungsmotors.

Ventilführungen unterliegen einer außerordentlich starken thermischen und mechanischen Beanspruchung. Da beide Bauteile üblicherweise aus Metallen bestehen, kann es infolge der starken Beanspruchung zu Verschweißerscheinungen kommen, die ein ungenaues Arbeiten der Ventile zur Folge haben. Dadurch wird die Wirkungsweise des Motors beeinträchtigt und seine Lebensdauer herabgesetzt. Der Auswahl der Werkstoffe zur Herstellung von Ventilführungen bzw. Ventilschäften kommt daher eine ganz besondere Bedeutung zu. Gemäß der DE-A-3 049 154 wurde vorgeschlagen, die bisher bekannter metallischen Ventilführungen aus Niresist, Zinnbronze, Aluminiumbronze oder Gußeisen durch eine röhrenförmige Ventilführung mit einer nitrierten inneren Oberfläche zu ersetzen und dadurch eine Verschleißminderung zu bewirken. Der Nachteil dieses Vorschlages besteht darin, daß lediglich die Oberfläche der Bohrung gehärtet ist, wobei aber die Gefahr besteht, daß nach Abtrag dieser harten Schicht ein wesentlich beschleunigter Verschleiß auftritt. Außerdem ist dieser Vorschlag für die ganz spezielle Problematik, wie sie beim Abblasventil eines Abgasturboladers besteht, deswegen weniger geeignet, weil hier nach wie vor die Gefahr des Verzunderns, d. h., die Bildung von Kraftstoffrückständen besteht.

Diese Gefahr besteht bekanntermaßen in verstärktem Umfang bei Verbrennungsgasen ausgesetzten Metallteilen, besonders aber beim Abblasventil eines Abgasturboladers, bei dem relativ lange Stillsstandszeiten zwischen den einzelnen Arbeitstakten liegen. Ein- und Auslaßventile bzw. deren Ventilführungen sind in dieser Beziehung weniger gefährdet, weil sie praktisch pausenlos in Betrieb sind und sich daher in deren Ventilführungen Rückstände in wesentlich geringerem Umfang ausbilden können, da bereits minimale Rückstände durch das fortwährende Arbeiten der Ventile abgetragen werden.

Gemäß der DE-A-3 200 549 wurden auch bereits Ventilführungen aus keramischem Werkstoff, nämlich aus Siliziumkarbid vorgeschlagen. Diese Ventilführungen haben sich in der Praxis aber bisher nicht durchsetzen können, obwohl Siliziumkarbid aufgrund seiner hohen Wärmeleitfähigkeit und seiner ausgesprochen guten Verschleißfestigkeit als besonders geeignet zur Herstellung von Ventilführungen anzusehen war.

Die Aufgabe der vorliegenden Erfindung besteht in der Überwindung der bestehenden Nachteile und darin, eine hochverschleißfeste Ventilführung für einen metallischen Ventilschaft zur Verfügung zu stellen, die auch unter extremer Beanspruchung, wie sie z. B. beim Auslaßventil eines Hochleistungsmotors oder in noch stärkerem Umfang beim Abblasventil eines Abgasturboladers auftritt, einen erheblich verringerten Verschleiß zeigt. Insbesondere sieht die Erfindung ihre Aufgabe darin, verschweißähnliche Erscheinungen zwischen Ventilschaft und Ventilführung auszuschalten, wie sie immer dann auftreten können, wenn metallische Reibungspartner ohne ausreichende Schmierung mit hoher Geschwindigkeit unter Temperaturbelastung gegeneinander arbeiten. Die Erfindung sieht ihre Aufgabe auch darin, eine Ventilführung für das Abblasventil eines Abgasturboladers zu entwickeln, bei dem die Rückstandsbildung der Verbrennungsgase in erheblicher Weise verringert wird. Eine weitere Aufgabe sieht die Erfindung in der Schaffung einer Ventilführung, die über eine höhere Härte als das Material des Ventilschaftes verfügt, aufgrund ihrer Oberflächenbeschaffenheit jedoch nicht zu einem vorschnellen Verschleiß des Ventilschaftes führt. Insgesamt gesehen besteht damit die Aufgabe der Erfindung in der Schaffung einer Ventilführung, die in den verschiedensten Aggregaten von Verbrennungsmotoren eingesetzt werden kann, die selbst über eine außerordentlich hohe Verschleißfestigkeit verfügt und dadurch in der Lage ist, die Lebensdauer des Motors zu erhöhen, indem sie ein weitaus sichereres und präziseres Arbeiten des Ventils auf Dauer ermöglicht.

Zur Lösung dieser Aufgabe sieht die Erfindung bei der eingangs beschriebenen Ventilführung die kennzeichnenden Merkmale von Anspruch 1 vor.

Die erfindungsgemäße Ventilführung hat eine hervorragende Verschleißfestigkeit. Wie sich aus einem Vergleichsversuch über 100 Betriebsstunden mit einer aus Stellit hergestellten Ventilführung ergab, liegt der Verschleiß einer Ventilführung aus teilstabilisiertem Zirkonoxid mit einer Porosität von 1,4 % um ca. das 50-fache niedriger. Weitere Vorteile liegen darin, daß verschweißähnliche Erscheinungen, wie sie zwischen metallischen Reibungspartnern beobachtet werden, bei der erfindungsgemäßen Ventilführung aus teilstabilisiertem Zirkonoxid und einem metallischen Ventilschaft ebenso wenig auftreten, wie Rückstandsbildungen der Verbrennungsgase, wodurch der erfindungsgemäßen Ventilführung eine besondere Eignung zum Einsatz in einem Abgasturbolader zukommt.

Im Rahmen der vorliegenden Erfindung ist in Beschreibung und Patentansprüchen unter teilstabilisiertem Zirkonoxid ein Zirkonoxid zu verstehen, das einen homogenen Gefügeaufbau besitzt und aus in der kubischen Modifikation vorliegenden Körnern, in denen tetragonale Ausscheidungen vorliegen, gebildet wird. Demzufolge ist ein Formkörper aus einem solchen teilstabilisiertem Zirkonoxid nicht mit den ebenfalls aus Zirkonoxid bestehenden Formkörpern zu verwechseln, die als hochfeuerfeste Materialien, sogenannte refractories, vornehmlich bei der Metallschmelze verwendet werden, die aber eine wesentlich höhere Porosität haben, eine sehr geringe Festigkeit aufweisen und deren hervorragendste Eigenschaft eine ausgeprägte Temperaturwechselbeständigkeit ist.

Obwohl die Verschleißfestigkeit von teilstabilisiertem Zirkonoxid mit einer relativ niedrigen Porosität < 3 % bereits aus der auf die Anmelderin zurückgehenden DE-C-2 307 666 seit längerem bekannt war, sind die hervorragenden Eigenschaften einer aus teilstabilisiertem Zirkonoxid bestehenden Ventilführung in sofern überraschend, als es sich hier nicht nur um eine hochtemperaturbelastete Reibungspaarung handelt, sondern auch zwischen Ventilführung und Ventilschaft die bei anderen Reibungspartnern übliche, verschleißmindernde Schmierung entfällt.

Bei den bekannten Ventilführungen erfolgt infolge der hohen Wärmeleitfähigkeit der verwendeten Metalle eine gute Ableitung der aus dem Verbrennungsraum aufgenommenen Wärme in den gekühlten Zylinderkopf. Dadurch und weil die verwendeten Metalle über sehr hohe Biegebruchfestigkeit verfügen, sind die bekannten metallenen Ventilführungen kaum durch thermisch induzierte Spannungen gefährdet. Teilstabilisiertes Zirkonoxid hat gänzlich andere physikalische Eigenschaften, nämlich :

eine relativ hohe — nur ca. 10 % niedriger als z. B. Stahl — thermische Ausdehnung, gleichzeitig aber auch ein sehr geringes Wärmeleitvermögen, das mit ca. 2,5 W/(m.K) um ca. das 10 bis 20-fache niedriger liegt als bei den üblichen Stahlsorten. Da teilstabilisiertes Zirkonoxid außerdem eine wesentlich geringere Biegebruchfestigkeit als die bisher verwendeten Metalle hat, waren infolge seiner für den vorliegenden Einsatzzweck außerordentlich ungünstigen Kombination von thermischen Eigenschaften an sich Spannungsrisse der Ventilführung zu erwarten, insbesondere auch deswegen, weil innerhalb von Ventilführungen in Verbrennungsmotoren ein starkes Temperaturgefälle herrscht. Bei hochverdichteten Benzinmotoren treten im verbrennungsraumnahen Bereich Temperaturen von ca. 1 000 °C auf, während am anderen Ende der Ventilführung 150 °C gemessen werden. Auch im Vergleich zu den weiteren bekannten keramischen Werkstoffen galt teilstabilisiertes Zirkonoxid eigentlich als weniger naheliegend, da seine Härte wesentlich geringer ist als die Härte von z. B. Aluminiumoxid oder Siliziumcarbid. So gesehen war von teilstabilisiertem Zirkonoxid eigentlich — vorbehaltlich seiner sonstigen Eignung — ein relativ geringfügig verringerter Verschleiß zu erwarten. In sofern kann die Auswahl von teilstabilisiertem Zirkonoxid mit einer Porosität < 3 %, bevorzugt < 1,5 %, als glücklicher Griff bezeichnet werden.

Ein sich aus der hohen linearen thermischen Ausdehnung von teilstabilisiertem Zirkonoxid ergebender Vorteil der vorliegenden Erfindung besteht darin, daß die erfindungsgemäße Ventilführung z. B. im Zylinderkopf oder in einem Abgasturbolader durch eine Schrumpfverbindung befestigt werden kann. Im Vergleich zu anderen keramischen Werkstoffen besteht dabei nicht die Gefahr, daß bei Erwärmung während des Motorbetriebes eine weniger starke Ausdehnung der Ventilführung als z. B. des Zylinderkopfes stattfindet und dadurch der feste Sitz der Ventilführung gelockert wird. Die Montagemöglichkeiten der erfindungsgemäßen Ventilführung sind aber nicht auf das Einbringen mittels einer Schrumpfverbindung beschränkt. Die Ventilführung kann auch eingeklebt oder mechanisch eingespannt werden.

In einer besonders bevorzugten Ausführungsform der vorliegenden Erfindung ist die Ventilführung ein Sinterformkörper, bestehend aus Zirkonoxid, das mit einem oder mehreren Oxiden des Magnesiums, Kalziums oder Yttriums teilstabilisiert ist, wobei Magnesiumoxid besonders bevorzugt ist, insbesondere in einer Menge von 2,7 bis 3,2 Gew.% bezogen auf Zirkonoxid. Bei einem mit Magnesiumoxid in dieser Menge teilstabilisierten Zirkonoxid liegt ein Maximum der Festigkeit und damit der Verschleißfestigkeit vor.

Neben der Art des verwendeten Stabilisierungsmittels hängt der Stabilisierungsgrad des Zirkonoxids von den Verfahrensbedingungen, wie z. B. Sinterzeit, Sintertemperatur, Abkühlraten und Korngröße des Zirkonoxids ab. Es ist dabei durchaus möglich, einige der Parameter, die den Stabilisierungsgrad des Zirkonoxids bestimmen, zu variieren und damit ein und den selben Stabilisierungsgrad zu erzielen.

Zur Einstellung eines besonders geringen Verschleißverhaltens ist in einer weiteren bevorzugten Ausführungsform die Bohrung der Ventilführung so bearbeitet, daß sie einen Mittenrauhwert $R_a$ von 0,03 bis 0,1 μm aufweist. Das gemäß der vorliegenden Erfindung verwendete teilstabilisierte Zirkonoxid einer Porosität < 3 % bietet dabei den Vorteil, daß es durch die üblichen Techniken der Oberflächenbearbeitung zu einer wesentlich gleichmäßigeren und feineren Oberfläche als z. B. Aluminiumoxid, Siliziumnitrid oder Siliziumcarbid bearbeitet werden kann.

Wenn auch noch nicht restlos geklärt ist, worauf die hervorragenden Eigenschaften der erfindungsgemäßen Ventilführung zurückzuführen sind, liegt doch die Vermutung nahe, daß hierfür die hohe Festigkeit dieses Materials, gemessen als Biegebruchfestigkeit $\sigma_B$ verantwortlich ist. Als besonders geeignet ist daher für die vorliegende Erfindung ein teilstabilisiertes Zirkonoxid anzusehen, das eine Biegebruchfestigkeit von mindestens 400 MPa aufweist.

Die nachfolgende Figur dient der näheren Erläuterung der Erfindung, ohne daß die Erfindung auf das gezeigte Ausführungsbeispiel beschränkt ist.

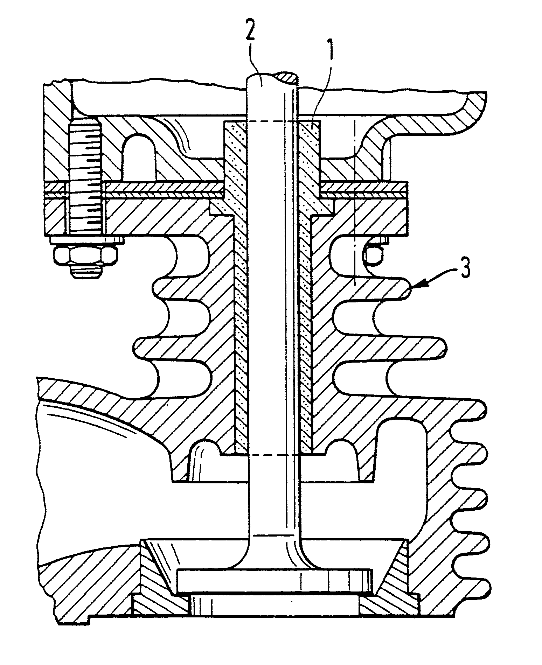

Die Figur zeigt in einer Schnittdarstellung einen Teil eines Ventilgehäuses 3 für einen nicht gezeigten Abgasturbolader. In einer Ventilführung 1 aus teilstabilisiertem Zirkonoxid ist ein metallischer Ventilschaft 2 angeordnet.

Bei dem teilstabilisierten Zirkonoxid handelt es sich um ein mit 2,9 Gew.% Magnesiumoxid stabilisiertes Zirkonoxid mit einer Porosität von 1 % und

einer Biegebruchfestigkeit $\varepsilon_B$ = 490 MPa. Die Bohrung der Ventilführung weist einen Mittenrauhwert $R_a$ von 0,07 μm auf.

## Patentansprüche

1. Röhrenförmig ausgebildete Ventilführung aus keramischem Werkstoff mit einer Bohrung für einen metallischen Ventilschaft (2) in einem Verbrennungsmotor, dadurch gekennzeichnet, daß die Ventilführung (1) ein Sinterkörper, bestehend aus einem teilstabilisierten Zirkonoxid mit einem einen 80 Gew.% nicht überschreitenden Anteil der kubischen Modifikation, einem Anteil der tetragonalen Modifikation zwischen 20 und 60 Gew.% und einem Anteil der monoklinen Modifikation von nicht größer als 6 Gew.%, wobei sich die Anteile der einzelnen Modifikationen auf 100 Gew.% ergänzen und das teilstabilisierte Zirkonoxid eine Porosität < 3 % aufweist.

2. Ventilführung nach Anspruch 1, dadurch gekennzeichnet, daß das Zirkonoxid mit einem oder mehreren Oxiden des Magnesiums, Kalziums und Yttriums teilstabilisiert ist.

3. Ventilführung nach einem der Ansprüche 1 bis 2, dadurch gekennzeichnet, daß die Bohrung der Ventilführung einen Mittenrauhwert $R_a$ von 0,03 bis 0,1 μm aufweist.

## Claims

1. Tubular valve guide of ceramic material, having a bore for a metallic valve shaft (2) in a combustion motor, characterised in that the valve guide (1) is a sintered body consisting of a partially stabilised zirconium oxide having a content of the cubic form that does not exceed 80 % by weight, a content of the tetragonal form of between 20 and 60 % by weight and a content of the monoclinic form that is no greater than 6 % by weight, the contents of the individual forms totalling 100 % by weight and the partially stabilised zirconium oxide having a porosity of < 3 %.

2. Valve guide according to claim 1, characterised in that the zirconium oxide is partially stabilised by one or more oxides of magnesium, calcium and yttrium.

3. Valve guide according to claim 1 or 2, characterised in that the bore in the valve guide has a mean depth of roughness $R_a$ of from 0.03 to 0.1 μm.

## Revendications

1. Guide soupape tubulaire en matériau céramique comportant un alésage pour une tige de soupape métallique (2) d'un moteur à combustion, caractérisé par le fait que le guide soupape (1) est un corps fritté réalisé en un oxyde de zirconium partiellement stabilisé avec un pourcentage de la modification cubique ne dépassant pas 80 % en poids, un pourcentage de la modification tétragonale entre 20 et 60 % en poids et un pourcentage de la modification monoclinique pas plus grand que 6 % en poids, les pourcentages des différentes modifications se complétant à 100 % et l'oxyde de zirconium partiellement stabilisé présentant une porosité < 3 %.

2. Guide soupape selon la revendication 1, caractérisé par le fait que l'oxyde de zirconium est partiellement stabilisé avec un ou plusieurs oxydes de magnésium, de calcium et d'yttrium.

3. Guide soupape selon l'une des revendications 1 à 2, caractérisé par le fait que l'alésage du guide soupape présente une rugosité moyenne arithmétique $R_a$ de 0,03 à 0,01 μm.